# EUROPEAN PATENT SPECIFICATION

(11) **EP 3 010 328 B1**
(45) Date of publication and mention of the grant of the patent: **29.11.2017**
(21) Application number: 14730892.8
(22) Date of filing: 16.06.2014
(51) Int. Cl.: A01G 25/14, A45F 3/20

(54) **PORTABLE WATER CONTAINER**
TRAGBARER WASSERBEHÄLTER
RÉCIPIENT D'EAU PORTABLE

(30) Priority: 17.06.2013 US 201361835723 P; 20.05.2014 US 201462000612 P
(43) Date of publication of application: 27.04.2016
(73) Proprietor: Pinto Chulvi, Victor Manuel, 46149 Gilet (ES); Esteve Hinarejos, Francisco Javier, 46185 La Pobla De Vallbona (ES)
(72) Inventor: Pinto Chulvi, Victor Manuel, 46149 Gilet (ES); Esteve Hinarejos, Francisco Javier, 46185 La Pobla De Vallbona (ES)
(74) Representative: ZBM Patents - Zea, Barlocci & Markvardsen
(86) International application number: PCT/EP2014/062579
(87) International publication number: WO 2014/202536

(56) References cited:
- WO-A2-2009/105674
- CN-Y- 201 290 903
- GB-A- 153 779
- US-A- 1 555 467

## Description

The present invention is related to a portable water container comprising a receptacle provided with a mouth, a shoulder strap, and an outlet provided with a hose.

### BACKGROUND ART

Certain areas in the world are facing a serious problem of water shortage. Yet there remain some practices that lead to the waste of fresh water. For example, when taking a shower a significant amount of cold or lukewarm water is wasted while the person who takes the shower is waiting for the water to reach a suitably hot temperature.

US 2010/0051107 A1 discloses a shower water-saving device having a dual functionality: collecting water from a showerhead and watering household or garden plants. The device can be used to catch the leading cold or lukewarm water from the shower head, which would otherwise be wasted, while the person taking the shower is waiting for the water with proper temperature to come and, after collecting the shower water, it can then be transformed, by attaching a lid (preferably having a spout) to the top opening of the bucket, into a hand-held watering bucket and be used to water household plants or plants in the garden.

But this device is rigid and needs two handles (or even three, counting the flip top handle), so it is cumbersome and hardly user-friendly.

US-A-1 555 467 discloses a collapsible watering can comprising a container (5), a U-shaped member 8 secured to the top rim of the container, a strap member (15), a nipple (9) with which a flexible discharge member (10) is coupled, and a sprinkling head (11) mounted in connection with the free end of the discharge member that can be passed over the U-shaped member and supported in an uptight vertical position thereby. But this device is also complex and cumbersome.

### SUMMARY

It would then be interesting to have a container for catching the leading cold water from the showerhead and other taps that is practical and easy to handle.

The present disclosure contemplates a portable unitary water container comprising a receptacle provided with a mouth, a shoulder strap, an outlet provided with a hose, and a hole for holding the outer end of the hose, whereby the receptacle can be filled through the mouth, the container can be hanged on the user's shoulder by the strap, and the hose can be used to water plants or be easily applied to other domestic uses. The receptacle can be filled through
the mouth with water from the showerhead, and the latter could be narrower than the mouth to enter the receptacle, though this is not strictly necessary because the receptacle can equally be filled from the outside of from other taps.

By virtue of the holding hole, the hose is not let hanging. The shoulder strap may be located next to the mouth and the hole may be located next to the shoulder strap, thus far from the main body of the receptacle.

The mouth may be located at the top of the receptacle and the outlet may be located at the bottom of the receptacle, and they may be located at opposite sides of the receptacle to, for example, readily allow pouring through the mouth by tilting the container, lifting it by the hose with one hand and holding it by the strap with the other hand.

As mentioned, the shoulder strap can be used to hang the container on the user's shoulder to be conveyed to the watering spot, but also to hang the container while it is being filled with showerhead or tap water.

The container may be made of a soft material like a plastic film, rubber, silicone, or any suitably flexible plastic, whereby it can be more or less flattened and easily packed away when not in use. The material may be transparent, or at least translucent, to allow seeing the water level in the receptacle.

The hole may be located at a height above the mid-height of the receptacle, for example at about three-quarters of said height, so that the outer end of the hose can be held higher than the water level in the receptacle and prevent accidental pouring thereof.

In an example, the hole may be an elongated slot. This is especially convenient when the hose material is very soft and the hose can be much flattened.

In another example, the hole may be substantially a circle of diameter slightly smaller than the diameter of the hose. This is more convenient when the hose material is not very soft and the hose can more or less keep its cylindrical shape. In this case, the hole may comprise at least one radial incision, but preferably four small radial incisions at right angles, for making the insertion of the hose through the hole easier.

The hose may comprise at least one arrow-shaped flap located at the outer end of the hose and tapering out in order to be better held in the hole. There may be two opposite arrow-shaped flaps.

The mouth may be an opening located at one corner of the receptacle, the shoulder strap being then located at the middle of the container or at the other side of the receptacle.

The mouth may be devoid of any closure that might hinder the insertion of the shower-head, or of the water itself, through the mouth. However, it may comprise a closure as well.

The outlet may be devoid of any closure that would complicate the container and make it more expensive. However, it may comprise a closure as well.

The container may be made in one piece or to become one piece, and can be manufactured in groups of two, the hose of one container extending along the width of the other container.

### BRIEF DESCRIPTION OF THE DRAWINGS

Some particular embodiments of the present invention will be described in the following, only by way of non-limiting examples, with reference to the appended drawings, in which:
figure 1 is a perspective view of a portable liquid container;
figure 2 is a view analogous to that of fig. 1 but with the hose deployed;
figure 3 is a side view of two packed containers;
figure 4 is a perspective view of another portable liquid container;
figure 5 is a top view of the container of fig. 4;
figure 6 is a view analogous to that of fig. 1 but with the hose deployed;
figure 7 illustrates the container of fig. 1 hanging by the shower;
figure 8 illustrates the container of fig. 1 being used for watering plants; and
figure 9 illustrates the container of fig. 1 being used for flushing the toilet.

### DETAILED DESCRIPTION

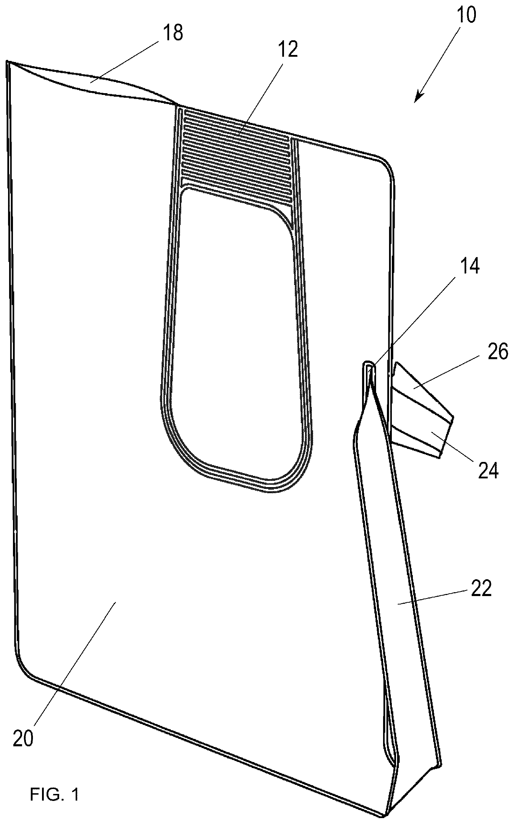

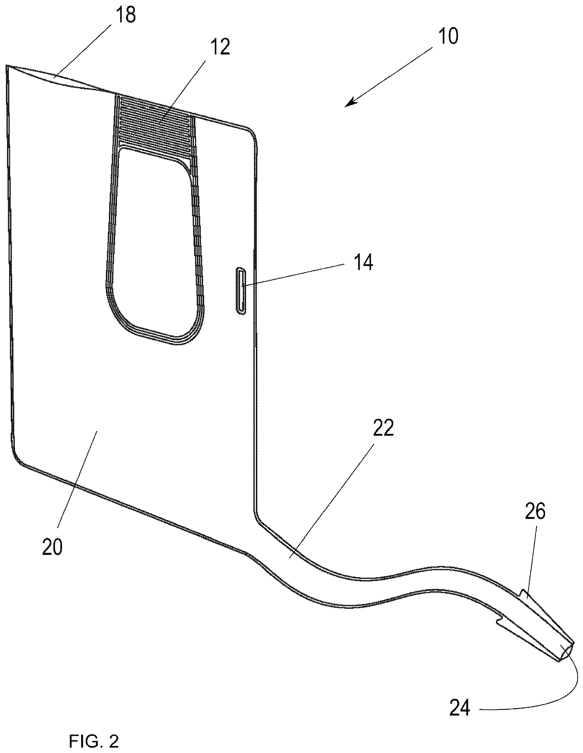

Figures 1 and 2 show a portable water container 10 having a shoulder strap 12 at its upper part or region. There is a small hole 14 for fastening an outlet hose 22 to avoid any water loss when a deposit or receptacle 20 is filled. The shoulder strap 12 is joined to the receptacle 20. At the lower part, the hose 22 is joined to the receptacle 20. The hose 22 has a nozzle 24 at its outer end. There is an arrow-shaped flap 26 attached to the nozzle 24. The nozzle 24 can stand fastened to the hole 14, or held by it, thanks to the arrow-shaped flaps 26. There is also a mouth 18 at the upper part of the container to fill the receptacle 20 with water from the showerhead or another household tap. The strap 12 is located next to the mouth 18, and the top of the container could also be open at the other side of the strap, above the hole 14.

The water container 10 can be made of soft materials like plastic films, rubber, silicone, injected moulding plastics or other similar materials.

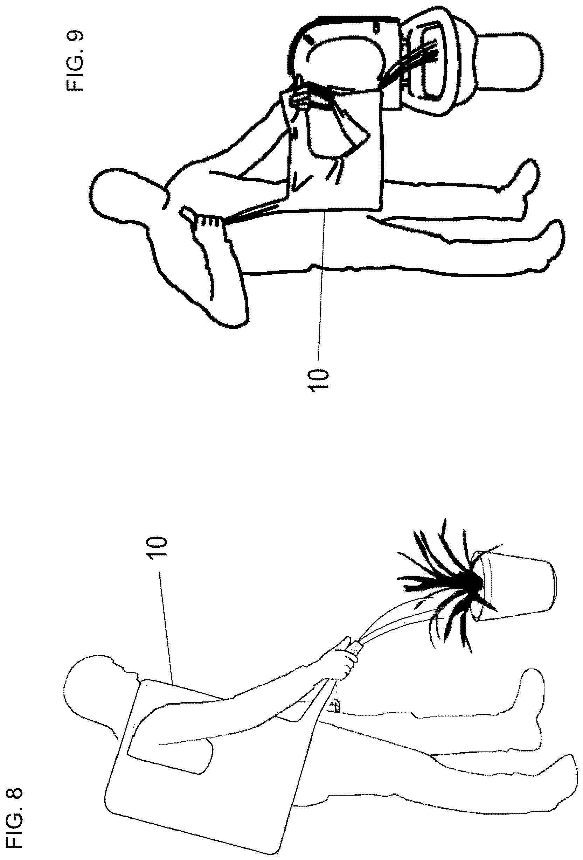

Once the water container 10 has water inside and the receptacle 20 is filled, it can be used as a sprinkler, as shown in figure 8. The water container 10 can be hanged on the user's shoulder and the hose 22 can be got out from the hole 14. When the nozzle 24 is at the same level than the water inside the receptacle 20, the water will pour from the nozzle 24.

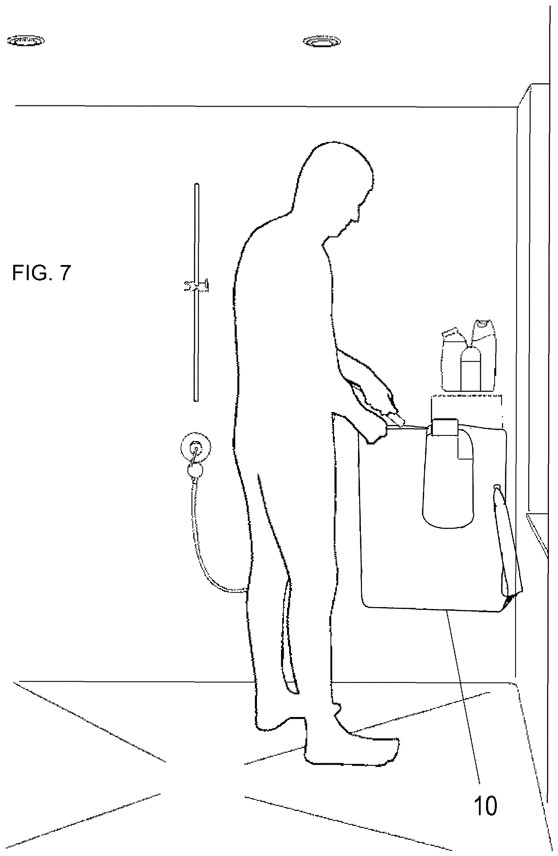

The advantageous features of this portable container include, without limitation, the hose for watering with precision, and the mouth in the upper part of the container for filling with shower or tap water. The portable water container saves the fresh water that is lost from taps when the water is still cold before the hot water actually comes out. The water container can be hanged by the shower to be filled, as shown in figure 7. Its shape makes it easy to fill with water. Once the container is full, the water in it can be reused for other uses. It can hang on the user's shoulder for easy transport. The container is very comfortable for watering plants, which only takes one hand of the user (fig. 8), but also for flushing the toilet (fig. 9), with one hand lifting it by the hose and the other hand holding it by the strap, whereby the container is tilted and the water comes out of the mouth.

The container may come in a flat pack.

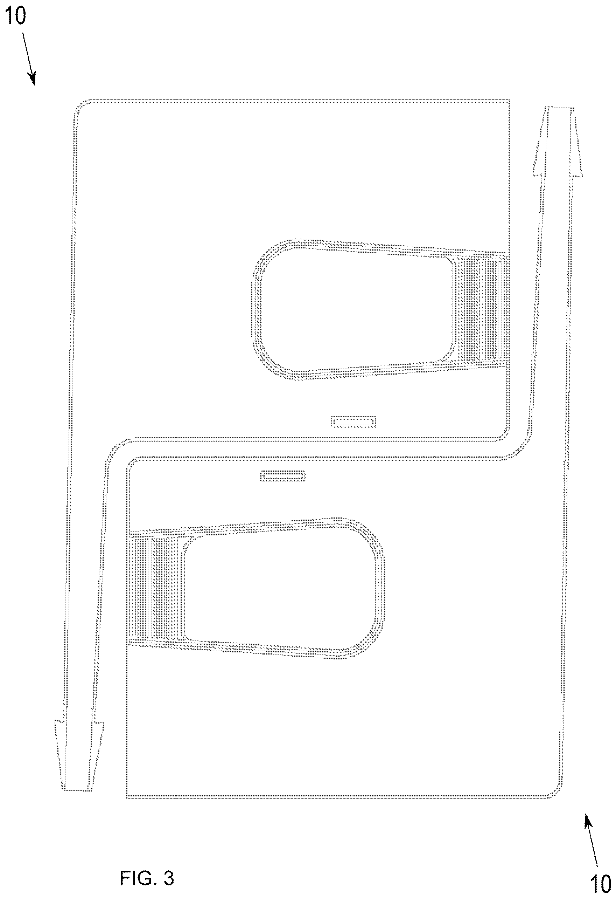

The container of figures 1 to 3 can be manufactured by high-frequency welding two sheets of thermoplastic polyurethane. However, depending on the material, it could be manufactured by heat-welding two plastic films or sheets. The resulting container is one-piece like, without any junction between its components. To make a better use of the material, the containers can be manufactured in pairs, like shown in figure 3. In this case, the hose length is approximately equal to the width of the receptacle. An advantage of a relatively short hose is that it does not get in the way of the user.

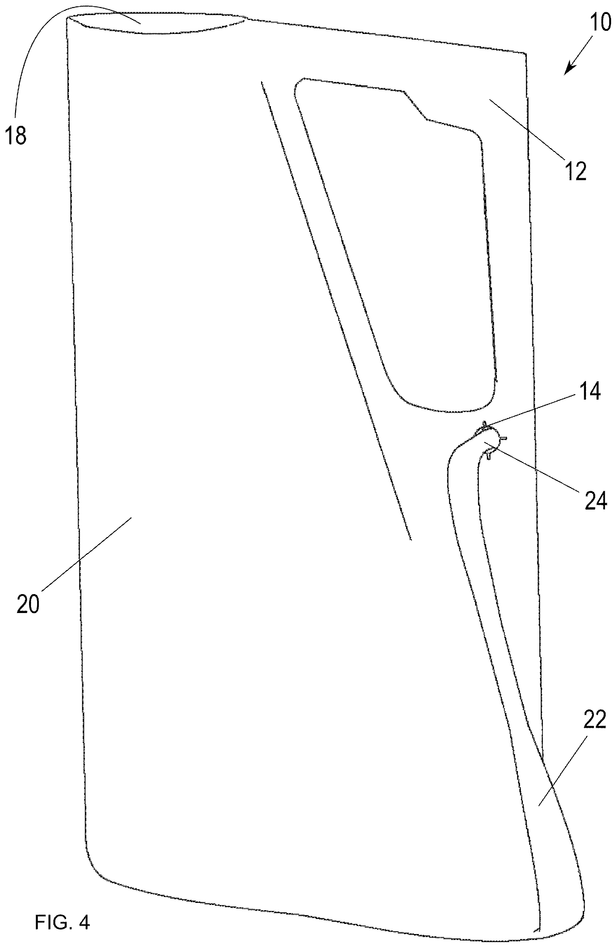

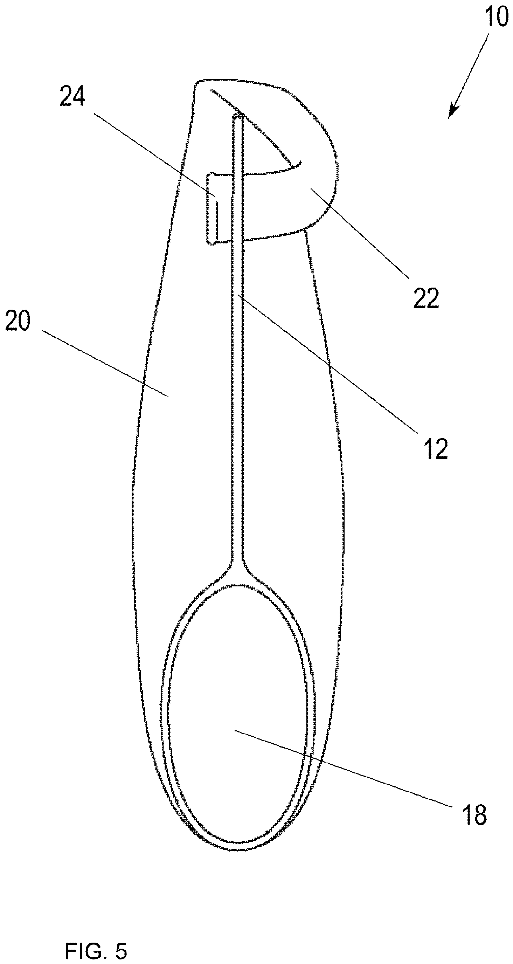

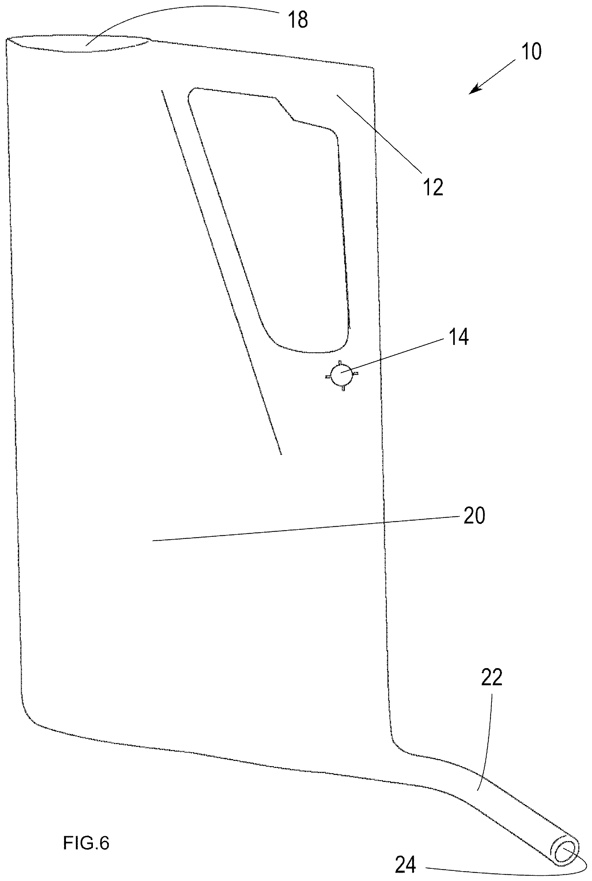

Figures 4 to 6 show another portable water container 10. It is similar to the one just described above and like elements are given like reference numerals. This container can be more rigid than the previously described, and can be moulded or injected in one piece.

Although only particular embodiments of the invention have been shown and described in the present specification, the skilled man will be able to introduce modifications and substitute any technical features thereof with others that are technically equivalent, depending on the particular requirements of each case, without departing from the scope of protection defined by the appended claims.

For example, the mouth could be provided with a closure, e.g. a zip seal. And the hose could be provided with a closure too, e.g. a valve.

## Claims

1. Portable water container (10) comprising a receptacle (20) provided with a mouth (18), the container also comprising a shoulder strap (12) and an outlet provided with a hose (22), **characterized by** further comprising a hole (14) for holding the outer end (24) of the hose, and by being a unitary piece.

2. Container according to claim 1, wherein the mouth is located at the top of the receptacle and the outlet is located at the bottom of the receptacle.

3. Container according to claim 1 or 2, wherein the mouth and the outlet are located at opposite sides of the receptacle.

4. Container according to any of the preceding claims, wherein the hole is located next to the shoulder strap.

5. Container according to any of the preceding claims, wherein the hole is located at a height above the mid-height of the receptacle.

6. Container according to any of the preceding claims, wherein the hole is an elongated slot.

7. Container according to any of claims 1 to 5, wherein the hole is substantially a circle of diameter smaller than the diameter of the hose.

8. Container according to claim 7, wherein the hole comprises at least one radial incision.

9. Container according to claim 8, wherein the hole comprises four radial incisions at right angles.

10. Container according to any of the preceding claims, wherein the hose comprises at least one arrow-shaped flap (26) located at the outer end of the hose and tapering out.

11. Container according to claim 10, wherein the hose comprises two opposite arrow-shaped flaps.

12. Container according to any of the preceding claims, wherein the mouth is devoid of any closure.

13. Container according to any of claims 1 to 11, wherein the mouth comprises a closure.

14. Container according to any of the preceding claims, wherein the outlet is devoid of any closure.

15. Container according to any of claims 1 to 13, wherein the outlet comprises a closure.

## Patentansprüche

1. Tragbarer Wasserbehälter (10) umfassend ein mit einem Eingang (18) versehenes Auffanggefäß (20), wobei der Behälter (10) auch einen Schulterriemen (12) und einen mit einem Schlauch (22) versehenen Auslass umfasst, **dadurch gekennzeichnet, dass** er weiterhin eine Öffnung (14) zur Halterung des äußeren Endes (24) des Schlauchs umfasst und dadurch, dass er einstückig ist.

2. Behälter nach Anspruch 1, wobei der Eingang im oberen Teil des Auffanggefäßes angeordnet ist und der Auslass am unteren Teil des Auffanggefäßes angeordnet ist.

3. Behälter nach Anspruch 1 oder 2, wobei der Eingang und der Auslass in gegenüberliegenden Seiten des Auffanggefäßes angeordnet sind.

4. Behälter nach einem der vorhergehenden Ansprüche, wobei die Öffnung angrenzend an dem Schulterriemen angeordnet ist.

5. Behälter nach einem der vorhergehenden Ansprüche, wobei die Öffnung auf einer Höhe oberhalb der mittleren Höhe des Auffanggefäßes angeordnet ist.

6. Behälter nach einem der vorhergehenden Ansprüche, wobei die Öffnung ein länglicher Schlitz ist.

7. Behälter nach einem der Ansprüche 1 bis 5, wobei die Öffnung im Wesentlichen ein Kreis ist, dessen Durchmesser kleiner als der Durchmesser des Schlauchs ist.

8. Behälter nach Anspruch 7, wobei die Öffnung mindestens einen radialen Einschnitt umfasst.

9. Behälter nach Anspruch 8, wobei die Öffnung vier radiale Einschnitte an rechten Winkeln umfasst.

10. Behälter nach einem der vorhergehenden Ansprüche, wobei der Schlauch mindestens eine pfeilförmige Lasche (26) umfasst, welche am äußeren Ende des Schlauchs angeordnet ist und verjüngt nach außen ausgebildet ist.

11. Behälter nach Anspruch 10, wobei der Schlauch zwei gegenüberliegende pfeilförmige Laschen umfasst.

12. Behälter nach einem der vorhergehenden Ansprüche, wobei der Eingang keine Schließung aufweist.

13. Behälter nach einem der Ansprüche 1 bis 11, wobei der Eingang eine Schließung aufweist.

14. Behälter nach einem der vorhergehenden Ansprüche, wobei der Auslass keine Schließung aufweist.

15. Behälter nach einem der Ansprüche 1 bis 13, wobei der Auslass eine Schließung aufweist.

## Revendications

1. Récipient d'eau portable (10) comprenant un réceptacle (20) muni d'une ouverture (18), le récipient (10) comprenant aussi une bandoulière (12) et un orifice de sortie muni d'un tuyau (22), **caractérisé en ce qu'**il comprend en outre un trou (14) pour soutenir l'extrémité extérieure (24) du tuyau, et **en ce qu'**il est une pièce unitaire.

2. Récipient selon la revendication 1, dans lequel l'ouverture est située dans la partie supérieure du réceptacle et la sortie est située dans la partie inférieure du réceptacle.

3. Récipient selon la revendication 1 ou 2, dans lequel l'ouverture et l'orifice de sortie sont situés dans des côtés opposés du réceptacle.

4. Récipient selon l'une quelconque des revendications précédentes, dans lequel le trou est situé à côté de la bandoulière.

5. Récipient selon l'une quelconque des revendications précédentes, dans lequel le trou est situé à une hauteur supérieure à mi-hauteur du réceptacle.

6. Récipient selon l'une quelconque des revendications précédentes, dans lequel le trou est une fente allongée.

7. Récipient selon l'une quelconque des revendications 1 à 5, dans lequel le trou est essentiellement un cercle de diamètre plus petit que le diamètre du tuyau.

8. Récipient selon la revendication 7, dans lequel le trou comprend au moins une échancrure radiale.

9. Récipient selon la revendication 8, dans lequel le trou comprend quatre échancrures radiales à des angles droits.

10. Récipient selon l'une quelconque des revendications précédentes, dans lequel le tuyau comprend au moins une languette en forme de flèche (26) située dans l'extrémité extérieure du tuyau et se rétrécissant vers l'extérieur.

11. Récipient selon la revendication 10, dans lequel le tuyau comprend deux languettes opposées en forme de flèche.

12. Récipient selon l'une quelconque des revendications précédentes, dans lequel l'ouverture est dépourvue de fermetures.

13. Récipient selon l'une quelconque des revendications 1 - 11, dans lequel l'ouverture comprend une fermeture.

14. Récipient selon l'une quelconque des revendications précédentes, dans lequel l'orifice de sortie est dépourvu de fermetures.

15. Récipient selon l'une quelconque des revendications 1 - 13, dans lequel l'orifice de sortie comprend une fermeture.
